# EUROPÄISCHE PATENTSCHRIFT

(11) **EP 1 185 791 B1**
(45) Veröffentlichungstag und Bekanntmachung des Hinweises auf die Patenterteilung: **08.10.2003**
(21) Anmeldenummer: 00935212.1
(22) Anmeldetag: 15.06.2000
(51) Int. Cl.: F04B 1/04, B60T 8/40

(54) **PUMPENAGGREGAT FÜR ABS/ASR/VSC-BREMSANLAGE**
PUMP AGGREGATE FOR AN ABS/ASC/VSC BRAKING SYSTEM
GROUPE MOTOPOMPE POUR SYSTEME DE FREINAGE ANTIBLOCAGE/ANTIPATINAGE/A REGULATION DE LA STABILITE DU VEHICULE

(30) Priorität: 16.06.1999 DE 19927454
(43) Veröffentlichungstag der Anmeldung: 13.03.2002
(73) Patentinhaber: Lucas Varity GmbH, 56070 Koblenz (DE)
(72) Erfinder: GEGALSKI, Helmut, D-56218 Mülheim-Kärlich (DE)
(74) Vertreter: Schmidt, Steffen J., Dipl.-Ing.
(86) Internationale Anmeldenummer: EP0005521
(87) Internationale Veröffentlichungsnummer: WO00077396

(56) Entgegenhaltungen:
- EP-A- 0 882 632
- WO-A-97/48583
- DE-A- 2 146 079
- DE-A- 19 709 776
- DE-A- 19 805 101

## Beschreibung

### Hintergrund der Erfindung

Die vorliegende Erfindung betrifft ein Pumpenaggregat insbesondere für eine ABS/ASR/VSC-Bremsanlage (Anti-Blockiersystem/ Automatisches Schluptre9elsystem/ Fahrzeugstabilitätsregelsystem) für Landfahrzeuge.

### Stand der Technik

Aus WO 97/48583 ist eine Radialkolbenpumpe mit einem Elektromotor bekannt, der eine Kolbenpumpenanordnung antreibt. Um etwaige Hydraulikfluidleckage von dem Elektromotor fernzuhalten, sind in dem Gehäuse der Kolbenpumpenanordnung Auffangräume und Kanäle ausgebildet, in die Hydraulikfluidleckage unter Schwerkraft- und/oder Fliehkraftwirkung gelangt, um dort gespeichert zu werden. Zwischen dem Elektromotor und der Kolbenpumpenanordnung ist ein offenes Wälzlager und an der dem Elektromotor zugewandten Seite des Wälzlagers eine Schleuderscheibe angeordnet, die vom Elektromotor angetrieben wird. Die Schleuderscheibe hält Hydraulikfluidleckage nach deren Durchtreten durch das offene Wälzlager von dem Elektromotor fern. Diese Radialkolbenpumpe kann nur waagrecht orientiert (mit dem Elektromotor neben der Kolbenpumpenanordnung) oder derart senkrecht orientiert eingebaut sein, daß der Elektromotor oberhalb der Kolbenpumpenanordnung angeordnet ist, denn wenn die Radialkolbenpumpe mit dem Elektromotor unterhalb der Kolbenpumpenanordnung eingebaut würde, würde das Hydraulikfluid aus den Auffangräumen und den Kanälen allein durch Schwerkraftwirkung in den Elektromotor fließen, insbesondere wenn der Elektromotor angehalten und die Schleuderscheibe nicht angetrieben ist.

Bei derartigen Pumpenaggregaten besteht ferner das Problem, daß aufgrund von Temperaturschwankungen zwischen dem Innenraum des Elektromotors und dem Raum, indem sich die Exzenterpumpenanordnung befindet ein (kurzfristiger) Differenzdruck von bis zu zwei Bar einstellen kann. Dies hat zur Folge, daß durch das Kugel- oder Nadellager für die Abtriebswelle überschüssiges Hydraulikfluid aus dem Raum, in dem sich die Leckage der Exzenterpumpenanordnung befindet, in das Innere des Elektromotors gesaugt wird. Insbesondere bei längeren Betriebszeiten des Pumpenaggregates (aufgrund eines Fahrzeugstabilitätsregelsystembetriebes) kann eine signifikante Menge Hydraulikfluid austreten, die durch einen Unterdruck in dem Elektromotor, der durch kurzfristige Abkühlung (durch an den Elektromotor gelangendes Spritzwasser) im Innern des Elektromotors entsteht, in diesen hineingezogen wird.

Herkömmliche Dichtmethoden (Dichtringe, abgedichtete Lager etc.) sind zu teuer und verhindern auch nicht, daß das Hydraulikfluid in die Umgebung verteilt wird.

Damit ist die Anordnung auch nicht tauchdicht (zum Beispiel für Off-Road Fahrzeuge).

Aus der DE 2146079 A ist eine von einem Elektromotor angetriebene Pumpenanordnung für eine Bremsanlage bekannt, wobei der Elektromotor unterhalb der Pumpenanordnung positioniert ist. Das an zwei Pumpenkolben in einen Exzenterraum der Pumpe übertretende Lecköl wird durch eine Leckölleitung in einen Nachfüllbehälter eines Hauptzylinders geleitet.

### Der Erfindung zugrundeliegendes Problem

Der Erfindung liegt das Problem zugrunde, den Bauraum in einem Fahrzeug optimal zu nutzen und insbesondere die oben aufgeführten Nachteile zu überwinden.

### Erfindungsgemäße Lösung

Zur Lösung dieses Problems schlägt die Erfindung ein Pumpenaggregat insbesondere für eine ABS/ASR/VSC-Bremsanlage, gemäß dem Anspruch 1 vor.

Die erfindungsgemäß in einem Pumpenaggregat angeordnete Speicherkammer kann aus dem Kolben austretendes Hydraulikfluid auch dann speichern, wenn das Pumpenaggregat mit dem Elektromotor unterhalb der Kolbenpumpenanordnung angeordnet ist. Das erfindungsgemäße Pumpenaggregat kann daher auch in dieser Lage in ein Fahrzeug eingebaut werden. Der Bauraum in dem Fahrzeug kann daher besser genutzt werden.

Der Elektromotor weist in seinem der Kolbenpumpenanordnung zugewandten Stirnbereich eine die Speicherkammer bildende Ausnehmung auf.

Bei der in der WO 97/48583 beschriebenen Radialkolbenpumpe sind sämtliche Kanäle und Auffangräume in dem Gehäuse der Kolbenpumpenanordnung ausgebildet. Im Gegensatz dazu kann erfindungsgemäß ein Totraum im Elektromotor als Speicherkammer genutzt werden, wodurch das Gesamtvolumen des Pumpenaggregats verkleinert ist.

### Vorteilhafte Weiterbildungen

Um zu verhindern, daß bei Erschütterungen des Pumpenaggregates (aufgrund eines rauhen Fahrbetriebes des Kraftfahrzeuges) aus der Speicherkammer Hydraulikfluid herausläuft, ist die Speicherkammer mit einem Hydraulikfluid aufsaugenden Material zumindest teilweise gefüllt.

In einer bevorzugten Ausführungsform der Erfindung umgibt die Speicherkammer die Abtriebswelle des Elektromotors zumindest teilkreisringförmig.

In gleicher Weise umgibt vorzugsweise der Auffangbereich die Abtriebswelle des Elektromotors zumindest teilweise.

Durch diese Anordnung ist sichergestellt, daß aus der Pumpenanordnung austretendes Hydraulikfluid sicher in den Auffangbereich und von diesem in die Speicherkammer gelangt.

In einer derzeit bevorzugten Ausführungsform ist zusätzlich die Abtriebswelle des Elektromotors mit einem mit der Abtriebswelle drehfest verbundenen Zentrifugalkörper versehen, der zu der Kolbenpumpenanordnung derart in räumlicher Beziehung steht, daß aus der Kolbenpumpenanordnung während des Betriebes austretendes Hydraulikfluid auf den Zentrifugalkörper gelangen kann, um von diesem in den Auffangbereich geschleudert zu werden. Damit wird verhindert, daß Hydraulikfluid entlang der Abtriebswelle (durch das im Stirnbereich des Elektromotors befindliche Lager) in den Innenraum des Elektromotors gelangen kann.

Weiterhin ist das Pumpenaggregat dazu eingerichtet, mit im wesentlichen senkrecht orientierter Abtriebswelle in einem Kraftfahrzeug angeordnet zu sein, wobei eine geringfügige Neigung von bis zu etwa 25°, vorzugsweise bis etwa 15° in Richtung des Auffangbereiches vorgesehen sein kann. Auch diese Maßnahme stellt sicher, daß aus der Pumpenanordnung austretendes Hydraulikfluid nicht in Bereiche außerhalb des Auffangbereiches bzw. der Speicherkammer gelangt.

Wenn gemäß einer bevorzugten Ausführungsform der Innenraum des Elektromotors mit der Kolbenpumpenanordnung durch eine an dem der Kolbenpumpenanordnung zugewandten Stirnbereich befindliche Belüftungsöffnung mit der Kolbenpumpenanordnung verbunden ist, kann auf einfache Weise ein Druckausgleich zwischen diesen beiden Bereichen stattfinden. Damit ist der Elektromotor im übrigen tauchdicht und für den Einbau im Motorraum eines Kraftfahrzeuges geeignet.

### Kurze Beschreibung der Zeichnungen

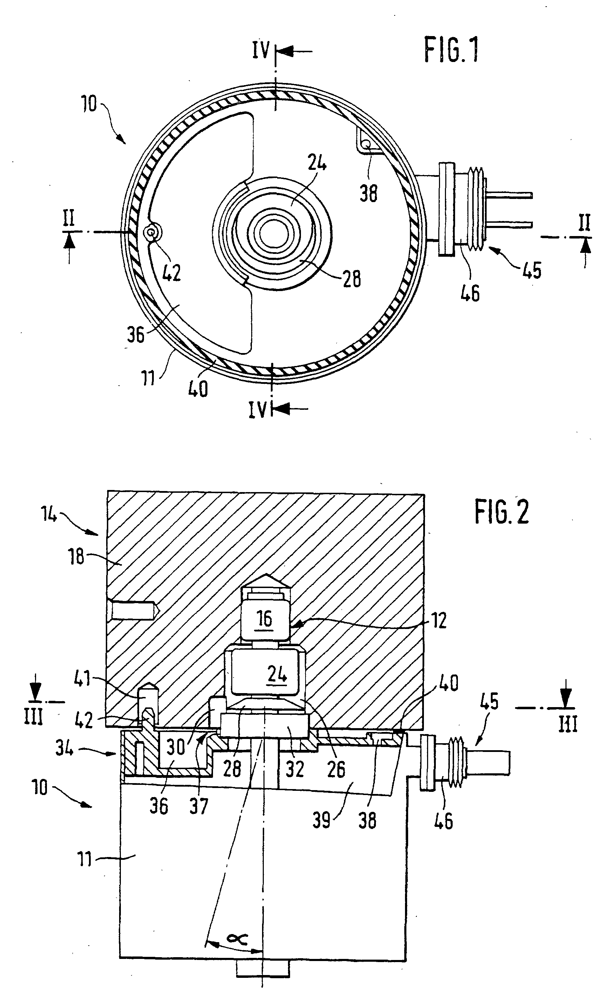

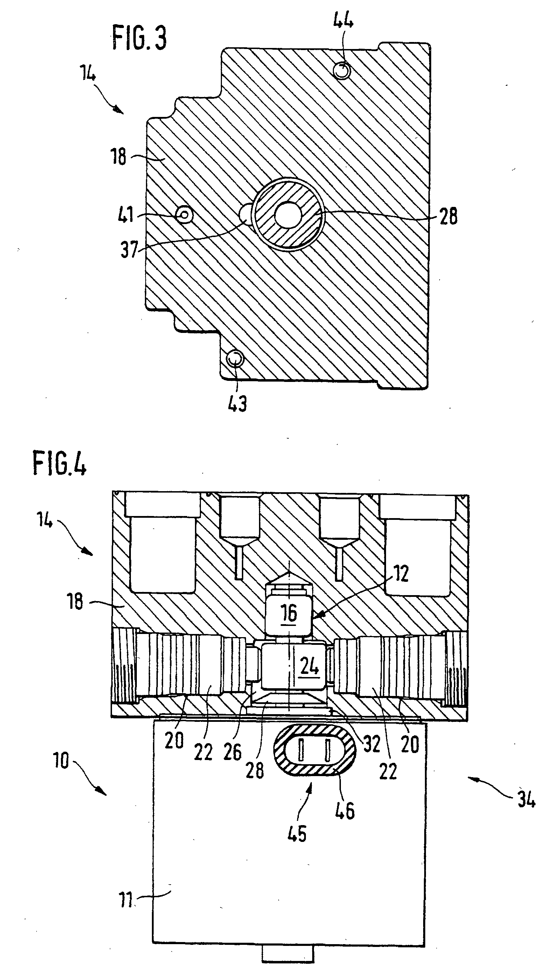

Weitere Eigenschaften, Vorteile, Merkmale und Variationsmöglichkeiten der Erfindung werden anhand der nachstehenden Beschreibung einer derzeit bevorzugten Ausführungsform der Erfindung unter Bezugnahme auf die Zeichnungen erläutert. Dazu zeigen
- Fig. 1: eine schematische Darstellung eines erfindungsgemäßen Pumpenaggregats in einer Draufsicht, wobei die Kolbenpumpenanordnung abgenommen ist,
- Fig. 2: den in Fig. 1 mit II-II bezeichneten Schnitt,
- Fig. 3: den in Fig. 2 mit III-III bezeichneten Schnitt und
- Fig. 4: den in Fig. 1 mit IV-IV bezeichneten Schnitt.

### Detaillierte Beschreibung der Ausführungsform

Das Pumpenaggregat umfaßt einen Elektromotor 10 mit einem im wesentlichen zylinderförmigen Motorgehäuse 11, aus dem bezogen auf Fig. 2 und 4 vertikal eine Abtriebswelle 12 in eine Kolbenpumpenanordnung 14 ragt. Die Abtriebswelle 12 ist durch ein Lager 16 in einem Pumpengehäuse 18 der Kolbenpumpenanordnung 14 drehbar gelagert. Das Pumpengehäuse 18 weist zwei bezogen auf Fig. 4 horizontal ausgerichtete Führungen 20 für je einen darin gleitend verschiebbaren Kolben 22 auf. Die Kolben 22 sind gegen einen exzentrischen Nocken 24 vorgespannt, der mit der Abtriebswelle 12 drehfest gekoppelt ist. Beim Drehen der Abtriebswelle 12 durch den Elektromotor 10 wird jeder der Kolben 22 durch den Nocken 24 axial verschoben und fördert dadurch Hydraulikfluid.

Beim Betrieb der Kolbenpumpenanordnung 14 kann zwischen den Führungen 20 und den Kolben 22 eine geringe Menge Hydraulikfluid austreten. Dieses austretende Hydraulikfluid gelangt in einen Raum 26, der den Nocken 24 umgibt.

Um den Bauraum in einem Fahrzeug optimal zu nutzen wird der Elektromotor 10 wie dargestellt unterhalb der Kolbenpumpenanordnung 14 und mit im wesentlichen vertikaler Abtriebswelle 12 im Fahrzeug eingebaut. Dabei besteht jedoch die Gefahr, daß das am Kolben 22 austretende Hydraulikfluid vertikal nach unten entlang der Abtriebswelle 12 in das Gehäuse 11 des Elektromotors 10 gelangt und dort zu Korrosion und Verschmutzung führt. Um dies zu verhindern, ist auf der Abtriebswelle 12 unterhalb des Nockens 24 ein kegelscheibenförmiger Zentrifugalkörper 28 drehfest angebracht, auf den das austretende Hydraulikfluid gelangt. Der Zentrifugalkörper 28 dreht sich im Betrieb der Kolbenpumpenanordnung 14 mit der Abtriebswelle 12 und fördert das austretende Hydraulikfluid radial nach außen.

Zwischen dem Pumpengehäuse 18 und der Abtriebswelle 12 ist radial außerhalb des Raums 26 ein Auffangbereich 3,0 ausgebildet. Der Zentrifugalkörper 28 fördert das Hydraulikfluid in diesen Aufnahmebereich 30 und verhindert somit, daß das Hydraulikfluid durch ein Lager 32 gelangen kann, das an der der Kolbenpumpenanordnung 14 zugewandten Stirnseite des Motorgehäuses 11 angeordnet ist.

Vertikal unterhalb des Auffangbereichs 30 ist durch eine Ausnehmung im Stirnbereich 34 des Motorgehäuses 11 eine teilkreisringförmige Speicherkammer 36 ausgebildet, die die Abtriebswelle 12 teilweise umgibt. Die Speicherkammer 36 ist durch eine hier als Bohrung ausgebildete Fluidleitung 37 mit dem Auffangbereich 30 verbunden. Da die Bohrung 37 den Raum 26 um die Abtriebswelle 12 schneidet, wirkt der auf der Höhe des Raumes 26 befindliche Bereich der Bohrung 37 als Auffangbereich 30. In diesen Bereich hineingeschleudertes oder hineinfließendes Hydraulikfluid gelangt durch die als Strömungskanal wirkende Bohrung 37 in die Speicherkammer 36. Das in den Auffangbereich 30 gelangte Hydraulikfluid strömt daher aufgrund der Schwerkraft in die Speicherkammer 36. Das Volumen der Speicherkammer 36 ist so bemessen, daß es das gesamte, während der Lebensdauer des Pumpenaggregats an dem Kolben 22 austretende Hydraulikfluid aufzunehmen vermag.

Um das Abfließen des Hydraulikfluids in die Speicherkammer 36 zu verbessern ist in der gezeigten Ausführungsform das Pumpenaggregat nicht genau vertikal sondern in einem Winkel ∝ etwa 15° in Richtung der Speicherkammer 36 geneigt angeordnet.

Während des Betriebs des Fahrzeugs ist die Bremsanlage und insbesondere das Pumpenaggregat Stößen und Schwingungen ausgesetzt, die dazu führen können, daß gespeichertes Hydraulikfluid aus der Speicherkammer 36 durch die Fluidleitung 37 und den Auffangbereich 30 hindurch zum Lager 32 strömt. Um das Ausströmen des Hydraulikfluids zu verhindern, ist zumindest teilweise in der Speicherkammer 36 ein Hydraulikfluid aufsaugenden Material (nicht dargestellt), wie beispielsweise eine Filzscheibe, angeordnet. Das aufsaugende Material kann nur an der Fluidleitung 37 oder im gesamten Volumen der Speicherkammer 36 ausgebildet sein.

Die Speicherkammer 36 kann durch einen eigenen Deckel (nicht dargestellt) verschlossen sein oder wie in der Fig. 2 gezeigt, im montierten Zustand des Pumpengehäuses 18 unmittelbar von diesem abgedeckt sein. Hierbei kann die Speicherkammer 36 zusätzlich mit einer an der Stirnfläche des Motorgehäuses 11 um die Speicherkammer 36 herum angeordneten Ringdichtung (nicht dargestellt) zum Pumpengehäuse 18 abgedichtet sein. Die Speicherkammer 36 kann alternativ auch im Pumpengehäuse 18 ausgebildet sein.

An der dem Pumpengehäuse 18 zugewandten Stirnseite des Motorgehäuses 11 ist an der dem Auffangbereich 30 radial gegenüberliegenden Seite, nahe am äußeren Umfang und in Drehrichtung in einem Winkel von etwa 20° versetzt eine Belüftungsbohrung 38 ausgebildet, die einen Druckausgleich zwischen dem Innenraum 39 des Motorgehäuses 11 und dem Raum 26 in dem Pumpengehäuse 18 ermöglicht. Die Belüftungsbohrung 38 ist vom Auffangbereich 30 maximal entfernt angeordnet, so daß ein mögliches Strömen von Hydraulikfluid aus dem Auffangbereich 30 in die Belüftungsbohrung 38 aufgrund der großen Distanz zwischen dem Auffangbereich 30 und der Belüftungsöffnung 38 zusätzlich erschwert ist.

An der Stirnseite des Motorgehäuses 11 ist an dessen Umfang ferner eine Ringdichtung 40 angegossen, die zwischen dem Motorgehäuse 11 und dem Pumpengehäuse 18 abdichtet. Das Pumpengehäuse 18 ist durch eine Ausnehmung 41 und einen am Motorgehäuse 11 angeordneten Positionierstift 42 zum Motorgehäuse 11 ausgerichtet sowie durch zwei Schrauben 43 und 44 am Motorgehäuse 11 befestigt. An der äußeren Umfangsfläche des Motorgehäuses 11 ist ein Stecker 45 angebracht, der nach außen absteht und durch eine Dichtung 46 abgedichtet ist. Durch die Ringdichtung 40 und die Dichtung 46 ist das Pumpenaggregat tauchdicht und kann daher auch im Motorraum beispielsweise eines Off-Road Fahrzeugs eingebaut werden.

## Patentansprüche

1. Pumpenaggregat insbesondere für eine ABS/ASR/VSC-Bremsanlage, mit
- einem Elektromotor (10), dessen Abtriebswelle (12) mit einer Kolbenpumpenanordnung (14) zur Förderung von Hydraulikfluid gekoppelt ist,
- einem Auffangbereich (30) für aus der Kolbenpumpenanordnung (14) während des Betriebes austretendes Hydraulikfluid, der mit einer Speicherkammer (36) verbunden ist, um darin Hydraulikfluid aufzunehmen, wobei
- der Elektromotor (10) und'die Kolbenpumpenanordnung (14) in der Einbaulage des Pumpenaggregats derart orientiert sind, daß sich der Elektromotor (10) unterhalb der Kolbenpumpenanordnung (14) befindet,
**dadurch gekennzeichnet, daß**
- die Abtriebswelle (12) mit der Kolbenpumpenanordnung (14) getrieblich gekoppelt ist,
- die Speicherkammer (36),sich unterhalb des Auffangbereiches (30) befindet, und
- der Elektromotor (10) in seinem der Kolbenpumpenanordnung (14) zugewandten Stirnbereich (34) eine die Speicherkammer (36) bildende Ausnehmung auf weist.

2. Pumpenaggregat insbesondere für eine ABS/ASR/VSC-Bremsanlage nach Anspruch 1, **dadurch gekennzeichnet, daß**_{.}
- die Speicherkammer (36) mit einem Hydraulikfluid aufsaugenden Material zumindest teilweise gefüllt ist.

3. Pumpenaggregat insbesondere für eine ABS/ASR/VSC-Bremsanlage nach Anspruch 1, **dadurch gekennzeichnet, daß**
- die Speicherkammer (36) die Abtriebswelle (12) des Elektromotors (10) zumindest teilkreisringförmig umgebend angeordnet ist.

4. Pumpenaggregat insbesondere für eine ABS/ASR/VSC-Bremsanlage nach Anspruch 1, **dadurch gekennzeichnet, daß**
- der Auffangbereich (30) die Abtriebswelle (12) des Elektromotors (10) zumindest teilweise umgibt.

5. Pumpenaggregat insbesondere für eine ABS/ASR/VSC-Bremsanlage nach Anspruch 1, **dadurch gekennzeichnet, daß**
- die Abtriebswelle (12) des Elektromotors (10) mit einem mit der Abtriebswelle (12) drehfest verbundenen Zentrifugalkörper (28) versehen ist, der zu der Kolbenpumpenanordnung (14) derart in räumlicher Beziehung steht, daß aus der Kolbenpumpenanordnung (14) während des Betriebes austretendes Hydraulikfluid auf den Zentrifugalkörper (28) gelangen kann, um von diesem in den Auffangbereich (30) geschleudert zu werden.

6. Pumpenaggregat insbesondere für eine ABS/ASR/VSC-Bremsanlage nach Anspruch 1, **dadurch gekennzeichnet, daß**
- das Pumpenaggregat dazu eingerichtet ist, mit im wesentlichen senkrecht orientierter Abtriebswelle in einem Kraftfahrzeug angeordnet zu sein, wobei eine geringfügige Neigung von bis zu etwa 25°, vorzugsweise bis etwa 15° in Richtung des Auffangbereiches (30) vorgesehen sein kann.

7. Pumpenaggregat insbesondere für eine ABS/ASR/VSC-Bremsanlage nach Anspruch 1, **dadurch gekennzeichnet, daß**
- der Innenraum. (39) des Elektromotors (10) mit der Kolbenpumpenanordnung (14) durch eine an dem der Kolbenpumpenanordnung (14) zugewandten Stirnbereich (34) befindliche Belüftungsöffnung (38) mit einem die Abtriebswelle (12) umgebenden Raum (26) in der Kolbenpumpenanordnung (14) verbunden ist.

8. Pumpenaggregat insbesondere für eine ABS/ASR/VSC-Bremsanlage nach Anspruch 1, **dadurch gekennzeichnet, daß**
- die Abtriebswelle (12) im Bereich der Kolbenpumpenanordnung (14) durch einen freien Raum (26) umgeben ist, an den sich ein Strömungskanal (37) zu der Speicherkammer (36) anschließt, wobei ein Teil des Strömungskanals (37) als Auffangbereich (30) ausgebildet ist.

9. Pumpenaggregat insbesondere für eine ABS/ASR/VSC-Bremsanlage nach Anspruch 6, **dadurch gekennzeichnet, daß**
- ein Lager (32) an der der Kolbenpumpenanordnung (14) zugewandten Stirnseite des Elektromotors (10) angeordnet ist, und
- der Zentrifugalkörper (28) oberhalb des Lagers (32) angeordnet ist, wenn das Pumpenaggregat mit dem Elektromotor (10) unterhalb der Kolbenpumpenanordnung (14) angeordnet ist.

10. Pumpenaggregat insbesondere für eine ABS/ASR/VSC-Bremsanlage nach Anspruch 6 oder 10, **dadurch gekennzeichnet, daß**
- der Zentrifugalkörper (28) kegelscheibenförmig ist.

## Claims

1. A pumping set in particular for an ABS/ASR/VSC brake system, comprising
- an electric motor (10), the output shaft (12) of which is coupled to a piston pump arrangement (14) for delivering hydraulic fluid,
- a collecting region (30) for hydraulic fluid escaping from the piston pump arrangement (14) during operation, which collecting region is connected to a storage chamber (36) in order to receive hydraulic fluid therein, wherein
- in the installed position of the pumping set the electric motor (10) and the piston pump arrangement (14) are oriented in such a way that the electric motor (10) is situated below the piston pump arrangement (14),
**characterised in that**
- the output shaft is drivingly connected to the piston pump arrangement (14),
- the storage chamber (36) is situated below the collecting region (30), and
- in its end region (34) facing the piston pump arrangement (14) the electric motor (10) has a recess forming the storage chamber (36).

2. The pumping set in particular for an ABS/ASR/VSC brake system according to claim 1, **characterised in that**
- the storage chamber (36) is at least partially filled with a hydraulic fluid absorbing material.

3. The pumping set in particular for an ABS/ASR/VSC brake system according to claim 1, **characterised in that**
- the storage chamber (36) is disposed so as to surround the output shaft (12) of the electric motor (10) at least in the shape of a graduated circle.

4. The pumping set in particular for an ABS/ASR/VSC brake system according to claim 1, **characterised in that**
- the collecting region (30) at least partially surrounds the output shaft (12) of the electric motor (10).

5. The pumping set in particular for an ABS/ASR/VSC brake system according to claim 1, **characterised in that**
- the output shaft (12) of the electric motor (10) is provided with a centrifugal body (28), which is non-rotatably connected to the output shaft (12) and is in such a spatial relationship to the piston pump arrangement (14) that hydraulic fluid, which escapes from the piston pump arrangement (14) during operation, may pass onto the centrifugal body (28) in order to be slung by the latter into the collecting region (30).

6. The pumping set in particular for an ABS/ASR/VSC brake system according to claim 1, **characterised in that**
- the pumping set is devised so as to be disposed with a substantially vertically oriented output shaft in a motor vehicle, wherein a slight inclination of up to around 25°, preferably up to around 15° in the direction of the collecting region (30) may be provided.

7. The pumping set in particular for an ABS/ASR/VSC brake system according to claim 1, **characterised in that**
- the interior (39) of the electric motor (10) is connected to the piston pump arrangement (14) by a ventilation bore (38), which is situated in the end region (34) facing the piston pump arrangement (14), to a space (26) surrounding the output shaft (12) in the piston pump arrangement (14).

8. The pumping set in particular for an ABS/ASR/VSC brake system according to claim 1, **characterised in that**
- the output shaft (12) is surrounded in the region of the piston pump arrangement (14) by a free space (26), which is adjoined by a flow channel (37) to the storage chamber (36), wherein a part of the flow channel (37) is designed as collecting region (30).

9. The pumping set in particular for an ABS/ASR/VSC brake system according to claim 6, **characterised in that**
- a bearing (32) is disposed at the end of the electric motor (10) facing the piston pump arrangement (14), and
- the centrifugal body (28) is disposed above the bearing (32) when the pumping set is disposed with the electric motor (10) below the piston pump arrangement (14).

10. The pumping set in particularfor an ABS/ASR/VSC brake system according to claim 6 or 10, **characterised in that**
- the centrifugal body (28) has the shape of a taper disk.

## Revendications

1. Groupe moto-pompe, en particulier pour un système de frein ABS/ASRNSC, avec
- un moteur électrique (10) dont l'arbre de sortie (12) est couplé avec un dispositif de pompe à pistons (14) pour débiter du fluide hydraulique,
- une zone de réception (30) pour le fluide hydraulique sortant du dispositif de pompe à pistons (14) pendant le fonctionnement, laquelle est reliée avec une chambre d'accumulation (36) pour recueillir dans celle-ci le fluide hydraulique,
dans lequel
- le moteur électrique (10) et le dispositif de pompe à pistons (14) sont orientés, dans la position de montage du groupe moto-pompe, de manière que le moteur électrique (10) se trouve en dessous du dispositif de pompe à pistons (14),
**caractérisé en ce que**
- l'arbre de sortie (12) est couplé, en liaison d'entraînement, avec le dispositif de pompe à pistons (14),
- la chambre d'accumulation (36) se trouve en dessous de la zone de réception (30), et
- le moteur électrique (10) présente, dans sa zone frontale (34) tournée vers le dispositif de pompe à pistons (14), un creux formant la chambre d'accumulation (36).

2. Groupe moto-pompe, en particulier pour un système de frein ABS/ASR/VSC selon la revendication 1, **caractérisé en ce que**
- la chambre d'accumulation (36) est remplie au moins en partie d'une matière aspirant le fluide hydraulique.

3. Groupe moto-pompe, en particulier pour un système de frein ABS/ASRNSC selon la revendication 1, **caractérisé en ce que**
- la chambre d'accumulation (36) est disposée en entourant, au moins en forme d'anneau circulaire partiel, l'arbre de sortie (12) du moteur électrique (10).

4. Groupe moto-pompe, en particulier pour un système de frein ABS/ASRNSC selon la revendication 1, **caractérisé en ce que**
- la zone de réception (30) entoure au moins en partie l'arbre de sortie (12) du moteur électrique (10).

5. Groupe moto-pompe, en particulier pour un système de frein ABS/ASR/VSC selon la revendication 1, **caractérisé en ce que**
- l'arbre de sortie (12) du moteur électrique (10) est doté d'un corps centrifuge (28) relié, de manière solidaire en rotation, avec l'arbre de sortie (12), lequel corps centrifuge est en relation spatiale avec le dispositif de pompe à pistons (14) de façon que le fluide hydraulique sortant du dispositif de pompe à pistons (14) pendant le fonctionnement peut parvenir sur le corps centrifuge (28) pour être projeté, à partir de celui-ci, dans la zone de réception (30).

6. Groupe moto-pompe, en particulier pour un système de frein ABS/ASR/VSC selon la revendication 1, **caractérisé en ce que**
- le groupe moto-pompe est prévu pour être disposé dans un véhicule automobile avec l'arbre de sortie orienté pour l'essentiel verticalement, une légère inclinaison de jusqu'à environ 25°, de préférence jusqu'à environ 15°, pouvant être prévue en direction de la zone de réception (30).

7. Groupe moto-pompe, en particulier pour un système de frein ABS/ASR/VSC selon la revendication 1, **caractérisé en ce que**
- l'espace intérieur (39) du moteur électrique (10) comportant le dispositif de pompe à pistons (14) est relié, par une ouverture de ventilation (38) située sur la zone frontale (34) tournée vers le dispositif de pompe à pistons (14), avec un espace (26), dans le dispositif de pompe à pistons (14), entourant l'arbre de sortie (12).

8. Groupe moto-pompe, en particulier pour un système de frein ABS/ASR/VSC selon la revendication 1, **caractérisé en ce que**
- l'arbre de sortie (12) est entouré, dans la zone du dispositif de pompe à pistons (14), par un espace libre (26) auquel fait suite un canal d'écoulement (37) vers la chambre d'accumulation (36), une partie du canal d'écoulement (37) étant conçu en tant que zone de réception (30).

9. Groupe moto-pompe, en particulier pour un système de frein ABS/ASR/VSC selon la revendication 6, **caractérisé en ce**
- **qu'**un palier (32) est disposé sur la face frontale du moteur électrique (10) tournée vers le dispositif de pompe à pistons (14) et
- **que** le corps centrifuge (28) est disposé au-dessus du roulement (32) lorsque le groupe moto-pompe avec le moteur électrique (10) est disposé en dessous du dispositif de pompe à pistons (14).

10. Groupe moto-pompe, en particulier pour un système de frein ABS/ASRNSC selon la revendication 6 ou 10, **caractérisé en ce que**
- le corps centrifuge (28) est en forme de disque conique.
